# EUROPEAN PATENT SPECIFICATION

(11) **EP 4 571 700 B1**
(45) Date of publication and mention of the grant of the patent: **14.10.2026**
(21) Application number: 25174626.9
(22) Date of filing: 02.03.2022
(51) Int. Cl.: G05D 1/633, G08G 5/25, G08G 5/26, G08G 5/53, G08G 5/55, G08G 5/80, G05D 105/22, G05D 109/25, G08G 5/72, G08G 5/57

(54) **CONFLICT DETECTION AND AVOIDANCE ALONG A CURRENT ROUTE OF A ROBOT**
KONFLIKTERKENNUNG UND -VERMEIDUNG ENTLANG EINER AKTUELLEN ROUTE EINES ROBOTERS
DÉTECTION ET ÉVITEMENT DE CONFLIT LE LONG D'UN TRAJET ACTUEL D'UN ROBOT

(30) Priority: 02.03.2021 US 202163155560 P
(43) Date of publication of application: 18.06.2025
(62) Document number(s) of the earlier application(s) in accordance with Art. 76 EPC: 22159604.2 / 4 053 666
(73) Proprietor: Aurora Flight Sciences Corporation, a subsidiary of The Boeing Company, Manassas VA 20110 (US)
(72) Inventor: REAGAN, Margaret, Arlington 22202 (US); SAUNDERS, Jeffery, Arlington 22202 (US); BOSWORTH, William R, Arlington 22202 (US)
(74) Representative: Boult Wade Tennant LLP

(56) References cited:
- WO-A1-2020/121215
- US-A1- 2016 375 901

## Description

### TECHNOLOGICAL FIELD

The present disclosure relates generally to robotics and, in particular, to one or more of the design, construction, operation or use of autonomous robots such as autonomous or semi-autonomous vehicles.

### BACKGROUND

Many modern robots and other machines are designed to operate with increased autonomy and are less reliant on well-trained operators to safely operate. Some of these modern robots are manned while others are unmanned. In particular, a variety of unmanned vehicles include unmanned ground vehicles (UGVs), unmanned aerial vehicles (UAVs), unmanned surface vehicles (USVs), unmanned underwater vehicles (UUVs), unmanned spacecraft and the like. The use of unmanned vehicles has grown in recent years and these unmanned vehicles are employed in a wide variety of applications, including both military and civilian uses.

One focus in the field of robotics is in the improvement of autonomy, which often includes multiple examples of robot operation. These examples of robot operation include automatic control of a given robot to support remote human control. Another example is optimization systems (and associated methods) to determine how, for a given robot or set of robots, tasks should be ordered and/or allocated. And yet another example of robot operation is automatic, real-time or near real-time data processing, and exploitation in support of automatic route planning, mission execution and other activities.

Despite advancements, existing autonomy systems are typically configured to address only one example of these activities, thereby focusing its design of the underling autonomy algorithms and software architecture on a narrow mission set. This limits the extensibility of existing autonomy systems. Furthermore, it is generally desirable to improve existing systems to enhance their efficiency and operation.

Therefore it would be desirable to have a system and method that takes into account at least some of the issues discussed above, as well as other possible issues.

WO 2020/121215, according to its abstract, states a method is described for the generation of a trajectory for the avoidance of a detected obstacle for a land vehicle driving along a planned path, particularly in a scenario of assisted or autonomous driving, wherein the avoidance trajectory includes at least one curvature with respect to a current reference direction of the vehicle, characterized in that the curvature has an amplitude that evolves over time with a sinusoidal pattern or with a composite pattern including sinusoidal and constant value sections, the sinusoidal pattern having a frequency lower than a predetermined maximum admissible frequency, lower than the maximum bandwidth of a control system of the dynamics of the vehicle arranged for the tracking of the avoidance trajectory by means of driving actuator means of the vehicle comprising at least one steering system.

### BRIEF SUMMARY

Examples of the present disclosure are directed to conflict detection and avoidance along a current route of a robot. Some examples use alternate routes having an offset from the current route to avoid detected conflicts between the robot and any nearby moving objects. Each of these alternate routes may include an alternative route segment offset from the current route, and a transition segment from the current route to the alternative route segment.

The alternative route segment may be defined before a mission is executed, or determined from the offset during the mission, which may allow the alternative route segment to be verified to be terrain obstacle free, dynamically feasible or otherwise optimal before the mission. During the mission, then, the robot may more simply determine the transition segment. The robot may also more simply return to the current path with just the transition segment back determined, which may require less computational resources than planning an entire route back to the current route after maneuvering in a direction for a previously unknown length of time to avoid a detected conflict.

The present disclosure thus includes, without limitation, the following examples.

Some examples provide a method of detecting and avoiding conflict along a current route of a robot, the method comprising accessing a trajectory of the robot on the current route of the robot, and a predicted trajectory of a nearby moving object; detecting a conflict between the robot and the nearby moving object from a comparison of the robot and the nearby moving object on respectively the trajectory of the robot, and the predicted trajectory of the nearby moving object; determining alternate routes for the robot, each alternate route including an alternative route segment offset from the current route, and a transition segment from the current route to the alternative route segment; evaluating routes including the alternate routes according to a cost metric that depends on a time or distance to a point of approach between the nearby moving object and the robot, and a distance from the current route; selecting a route from the higher ranked routes for use in at least one of guidance, navigation or control of the robot to avoid the conflict; and causing the robot to execute a maneuver to cause the robot to travel the route as selected.

In some examples of the method of the preceding paragraph, the current route of the robot is described by at least one of a route command, a flight plan or a mission route, and the method further comprises determining the trajectory of the robot using the at least one of the route command, the flight plan or the mission route.

In some examples of the method of either of the preceding two paragraphs, the alternative route segment is a predefined alternative route segment, and determining the alternate routes comprises for an alternative route accessing information that describes the predefined alternative route segment; and determining the transition segment from the current route to the predefined alternative route segment.

In some examples of the method of any of the preceding three paragraphs, the offset is a predefined geometric offset, and determining the alternate routes comprises for an alternative route accessing information that describes the predefined geometric offset; determining the alternative route segment having the predefined geometric offset; and determining the transition segment from the current route to the alternative route segment as determined.

In some examples of the method of any of the preceding four paragraphs, determining the alternate routes comprises for an alternative route determining the offset that is a function of at least one of a type of the robot, a state of the robot, or a status of the robot; determining the alternative route segment having the offset as determined; and determining the transition segment from the current route to the alternative route segment as determined.

In some examples of the method of any of the preceding five paragraphs, the cost metric further depends on at least one of terrain along the routes, or a state of an environment of the robot.

In some examples of the method of any of the preceding six paragraphs, the method further comprises causing the robot to travel the route as selected.

In some examples of the method of any of the preceding seven paragraphs, the method further comprises causing the robot to travel the route that is one of the alternate routes; and causing the robot to return to the current route during travel of the robot on the one of the alternate routes.

Some examples provide an apparatus for detecting and avoiding conflict along a current route of a robot, the apparatus comprising a memory configured to store computer-readable program code; and processing circuitry configured to access the memory, and execute the computer-readable program code to cause the apparatus to at least perform the method of any of the eight preceding paragraphs. Other examples provide a computer-readable storage medium for detecting and avoiding conflict along a current route of a robot, the computer-readable storage medium being non-transitory and having computer-readable program code stored therein that, in response to execution by processing circuitry, causes an apparatus to at least perform the method of any of preceding eight paragraphs.

These and other features, examples, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example described herein. This disclosure is intended to be read holistically such that any separable features or elements of the disclosure, in any of its examples, should be viewed as combinable unless the context of the disclosure clearly dictates otherwise.

It will therefore be appreciated that this Brief Summary is provided merely for purposes of summarizing some examples so as to provide a basic understanding of the disclosure. Other examples and advantages will become apparent from the following detailed description taken in conjunction with the accompanying figures which illustrate, by way of example, the principles of some described examples.

### BRIEF DESCRIPTION OF THE FIGURE(S)

Having thus described examples of the disclosure in general terms, reference will now be made to the accompanying figures, which are not necessarily drawn to scale, and wherein:
FIG. 1 illustrates one type of robot, namely, an unmanned aerial vehicle;
FIG. 2 illustrates a system;
FIG. 3 more illustrates a mission management system (MMS);
FIG. 4 illustrates a scenario in which the robot is executing a mission in which the robot is to travel on a current route in an environment in which one or more moving objects are nearby the robot;
FIG. 5 is a diagram of services that may be implemented by the MMS for conflict detection and avoidance with respect to one or more nearby moving objects;
FIG. 6 illustrates routes including the current route and alternate routes that the robot may be caused to travel;
FIG. 7 illustrates the current route of the robot on which a conflict is detected, and an alternate route that the robot may be caused to travel to avoid the conflict;
FIGS. 8A, 8B, 8C, 8D, 8E and 8F are flowcharts illustrating various steps in a method of detecting and avoiding conflict along a current route of a robot; and
FIG. 9 illustrates an apparatus.

### DETAILED DESCRIPTION

Some examples of the present disclosure will now be described more fully hereinafter with reference to the accompanying figures, in which some, but not all examples of the disclosure are shown. Indeed, various examples of the disclosure may be embodied in many different forms and should not be construed as limited to the examples set forth herein; rather, these examples are provided so that this disclosure will be thorough and complete, and will fully convey the scope of the disclosure to those skilled in the art. For example, unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Like reference numerals refer to like elements throughout. Furthermore, it should be understood that unless otherwise specified, the terms "data," "content," "digital content," "information," and similar terms may be at times used interchangeably.

Examples of the present disclosure relate generally to robotics and, in particular, to one or more of the design, construction, operation or use of robots. As used herein, a robot is a machine designed and configurable to execute maneuvers in its environment. The robot may be manned or unmanned. The robot may be fully human-controlled, or the robot may be semi-autonomous or autonomous in which at least some of the maneuvers are executed independent of or with minimal human intervention. In some examples, the robot is operable in various modes with various amounts of human control.

A robot designed and configurable to fly may at times be referred to as an aerial robot. A robot designed and configurable to operate with at least some level of autonomy may at times be referred to as an autonomous robot, or an autonomous aerial robot in the case of an autonomous robot that is also designed and configurable to fly. Examples of suitable robots include aerobots, androids, automatons, autonomous vehicles, explosive ordnance disposal robots, hexapods, industrial robots, insect robots, microbots, nanobots, military robots, mobile robots, rovers, service robots, surgical robots, walking robots and the like. Other examples include a variety of unmanned vehicles, including unmanned ground vehicles (UGVs), unmanned aerial vehicles (UAVs), unmanned surface vehicles (USVs), unmanned underwater vehicles (UUVs), unmanned spacecraft and the like. These may include autonomous cars, planes, trains, industrial vehicles, fulfillment center robots, supply-chain robots, robotic vehicles, mine sweepers, and the like.

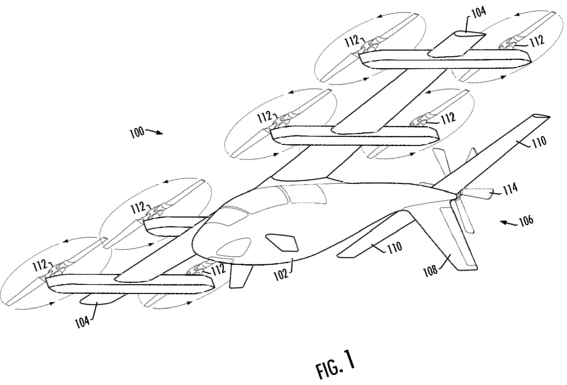

FIG. 1 illustrates one type of robot, namely, a UAV **100,** that may benefit from examples of the present disclosure. As shown, the UAV may include a fuselage **102,** wings **104** extending from opposing sides of the UAV in a mid-section of the fuselage, and an empennage or tail assembly **106** at a rear end of the fuselage. The tail assembly includes a vertical stabilizer **108** and two horizontal stabilizers **110** extending from opposing sides of the UAV. Rotors **112** and **114** are mounted to respectively the wings and the end of the tail assembly for lifting and propelling the UAV during flight.

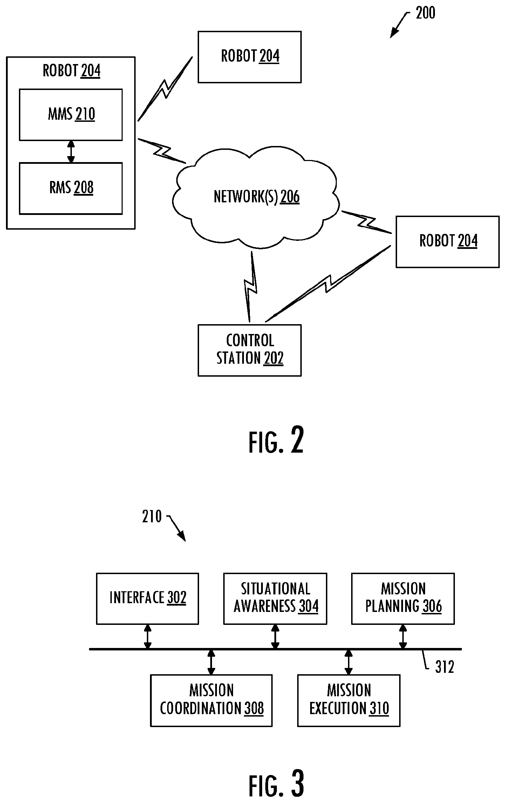

FIG. 2 illustrates a system **200** according to some examples of the present disclosure. The system may include any of a number of different subsystems (each an individual system) for performing one or more functions or operations. As shown, in some examples, the system includes a control station **202** and one or more robots **204** (e.g., one or more UAVs **100**). The control station provides facilities for communication with or control of the one or more robots, such as by wired or wireless data links directly or across one or more networks **206.** In some examples, the control station may be a ground station, and not in all cases control the robots. In this regard, the control station may be configured to monitor the robots. The control station may initiate mission, but the control station may not control the robots to maneuver. At times, then, the control station may enable or provide a distributed network/server of software functions.

The robot **204** includes a robot management system (RMS) **208** and a mission management system (MMS) **210.** The RMS is a robot-specific subsystem configured to manage subsystems and other components of the robot. These subsystems and other components include, for example, maneuver controls, landing gear, onboard environmental systems, electrical, pneumatic and hydraulic systems, communications systems, navigation systems and other subsystems and components for controlling operation and maneuvering of the robot. The RMS is configured to accept maneuver commands such as waypoints and/or steering commands, and control the robot to follow those maneuver commands. In the context of a vehicle, the RMS is at times referred to as a vehicle management system (VMS).

The MMS **210** is a subsystem configured to manage missions of the robot **204.** A mission is a deployment of the robot (one or more robots) to achieve one or more mission objectives. A mission may be decomposed into maneuvers of the robot with optional sensor and/or effector scheduling, and the MMS may execute tasks to manage the robot to execute maneuvers with specific parameters and capabilities. The MMS **210** includes subsystems to process sensor data to situational awareness, plan tasks for the robot **204** (or multiple robots), coordinate with teams to assign tasks, execute assigned tasks. The MMS is also configured to interface with the RMS **208,** and in some examples the control station **202.** Although the MMS is shown on the robot **204,** the MMS may instead be at the control station; or in some examples, the MMS may be distributed between the robot and the control station.

In some examples, the MMS **210** provides a complete, end-to-end autonomy architecture with open system architecture standards and parameterized to allow rapid extension and reapplication to a variety of robots. The flexibility of the MMS enables an operator to code it once, but to apply it anywhere. The MMS may therefore be applied to virtually any robot that applies, or benefits from, autonomy. The MMS may include an adaptable autonomy architecture that is applicable to a variety of robots, including those identified above. A benefit of the MMS is therefore not only in the specific contents, but also in the specific details of the architecture, its subroutines, and in the interfaces between those subroutines and other systems/devices that support rapid extensibility and adaptability of the MMS to a variety of domains.

FIG. 3 more particularly illustrates the MMS **210** according to some examples of the present disclosure. The MMS may include any of a number of different subsystems (each an individual system) for performing one or more functions or operations. As shown, in some examples, the MMS includes an interface subsystem **302,** a situational awareness subsystem **304,** a mission planning subsystem **306,** a mission coordination subsystem **308,** and a mission execution subsystem **310.** As suggested above, in some examples, the subsystems of the MMS may be on the robot **204,** at the control station **202,** or distributed between the robot and the control station. The subsystems may be configured to communicate with one another directly, over a communication bus **312,** or across the network(s) **206** in examples in which the MMS is distributed between the robot and the control station.

The subsystems enable the MMS **210** of the robot **204** to interface with the system **200,** perform situational awareness, plan a mission including a plurality of tasks, coordinate the plurality of tasks and thereby the mission with other robots **204,** and execute the mission. For example, the MMS may use the interface subsystem **302** to interface with various sensors onboard the robot, the RMS **208,** the control station **202** and/or other robots. The MMS may use the situational awareness subsystem **304** to acquire sensor data and maintain an awareness of the state of the environment in which the robot is operating. The MMS may use the mission planning subsystem **306** to plan a mission including or associated with a plurality of tasks, and which may incorporate rules of engagement, tactics and other constraints on operations. The MMS may likewise use the mission planning subsystem to dynamically replan a mission in which changes to the mission are made in real-time or near real-time as the mission is executed. The MMS may use the mission coordination subsystem **308** to coordinate the plurality of tasks of the mission with other robots and users, where agreed-upon tasks may then be executed by the MMS using the mission execution subsystem **310.**

According to some examples of the present disclosure, the MMS **210** is also configured to implement software functionality or functionalities (at times referred to as services) during a mission to provide the robot **204** with conflict detection and avoidance capabilities. During a mission, the robot may take a path, and this path may be described by a series of waypoints that define a route the robot will travel. The robot travels with a velocity (speed and direction of motion), and the series of waypoints and velocities at that define the route with respect to time defines a trajectory of the robot (at times referred to as a track of the robot). The conflict detection and avoidance capabilities enable the robot to detect and avoid conflicts along its route of travel.

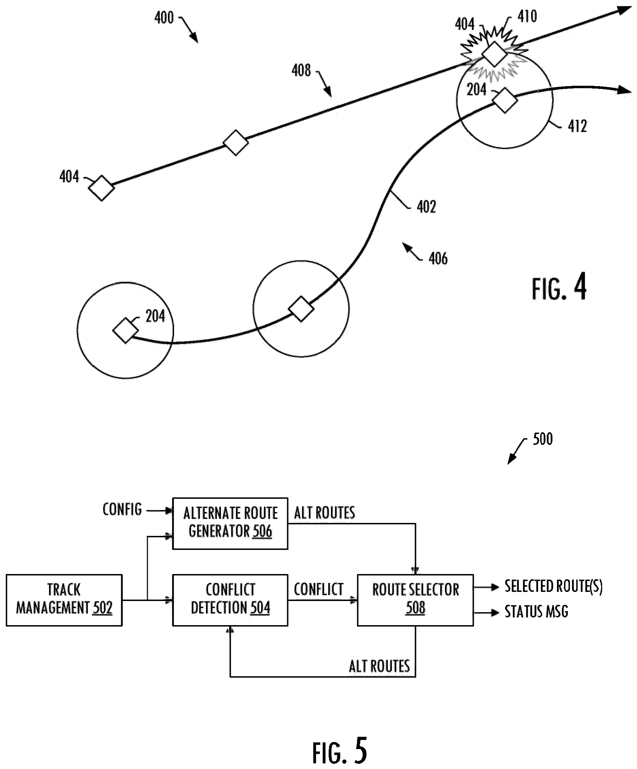

FIG. 4 illustrates a scenario **400** in which the robot **204** is executing a mission in which the robot is to travel on a current route **402** in an environment in which one or more moving objects **404** are nearby the robot. In some examples, these moving objects are other robots that may be of the same type or different types than the robot. Other examples of suitable moving objects include non-robot vehicles such as any of a number of different types of ground vehicles, watercraft, aircraft, spacecraft or the like.

FIG. 5 is a diagram of services **500** that may be implemented by the MMS **210** for conflict detection and avoidance with respect to nearby moving objects **404,** according to some examples. As shown, the services may include a track management **502** service, conflict detection **504** service, alternate route generator **506** service, and a route selector **508** service. In some examples, the track management service may be implemented by the situational awareness subsystem **304** of the MMS; and the conflict detection service, alternate route generator service and route selector service may be implemented by the mission execution subsystem **310** of the MMS.

The track management **502** service is configured to determine a trajectory **406** of the robot **204** on the current route **402,** such as from data that indicates a position and a velocity of the robot. The data may include state data that describes position and velocity of the robot, and which in some examples may be received from the RMS **208.** In some examples, the current route for the robot is described by a route command, a flight plan (for an aerial robot) and/or a mission route; and in some of these examples, the trajectory of the robot is determined using the route command, the flight plan and/or the mission route. In this regard, the route in some examples is a planned route of the robot.

In some examples, the track management **502** service is also configured to determine a predicted trajectory **408** of nearby moving object(s) **404,** such as from data that indicates a position and a velocity of the nearby moving object(s). This data may be or include sensor data from any of a number of different sensors including those employing technologies such as acoustics, radio, optics and the like. More particular examples of suitable sensors include those employing radar, lidar, infrared sensors, cameras and the like. Another example of a suitable sensor in the context of an aerial robot is an automatic, dependent surveillance-broadcast (ADS-B) receiver configured to receive ADS-B signals.

The conflict detection **504** service of the services **500** that may be implemented by the MMS **210** is configured to access the trajectory **406** of the robot **204** on the current route **402** of the robot, and the predicted trajectory **408** of the nearby moving object **404,** such as from the track management **502** service. The conflict detection service is configured to detect a conflict **410** between the robot and the nearby moving object from a comparison of the robot and the nearby moving object on respectively the trajectory of the robot, and the predicted trajectory of the nearby moving object; and the conflict detection service is configured to output an indication of the conflict, which may include a time or distance to a point of approach between the nearby moving object and the robot. In some examples, the point of approach is the closest point of approach between the nearby moving object and the robot. The conflict may be detected in any of a number of different manners, such as when the nearby moving object is within a clear region **412** that includes the robot, and a time to the point of approach between nearby moving object and the robot is less than a time threshold value. The clear region in various examples may be referred to as a well-clear region, boundary, violation volume or the like.

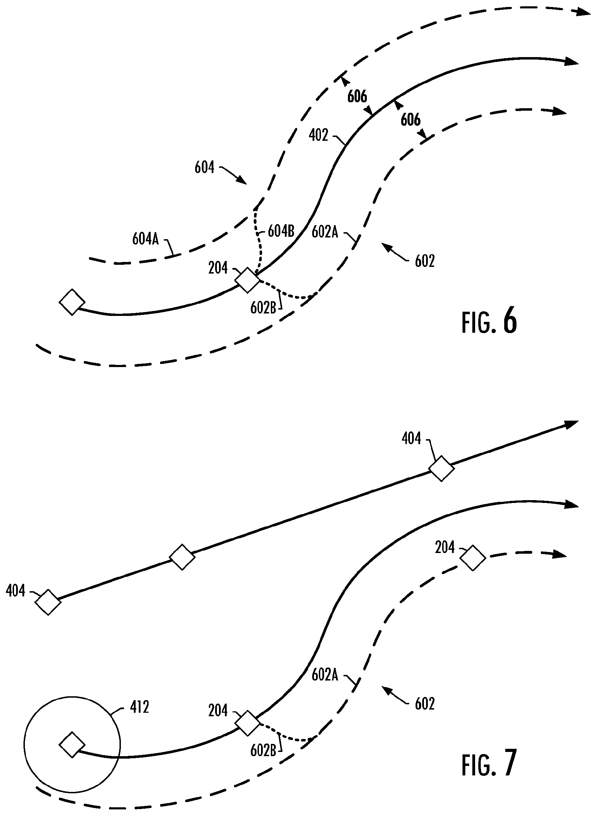

The alternate route generator **506** service is configured to determine alternate routes for the robot. Each alternative route includes an alternative route segment offset from the current route, and a transition segment from the current route to the alternative route segment. FIG. 6 illustrates, for example, a current route **402** and alternate routes **602, 604.** As shown, each alternative route includes an alternative route segment **602A, 604A** that is offset **606** from the current route, and a transition segment **602B, 604B** from the current route to the alternative route segment. In some examples, the offset is a geometric offset, and the alternative route segment has a geometric offset from the current route.

The alternative route segment **602A, 604A** may be predefined or determined from the offset **606.** Similarly, the transition segment **602B, 604B** may be predefined or determined. Any one or more of the alternative route segment, the offset or the transition segment may be defined or described in configuration data accessed by or provided to the alternative route generator **506** service. The alternative route segment and thereby the offset may be the same or different across the alternative routes **602, 604.** the offset may be fixed or variable. The offset may be independent of or depend on the robot **204** or type of robot, the state of the robot, and/or the status of the robot. In some particular examples, the transition segment is defined as a Dubins path that connects the position of the robot on the current route **402,** to a position of the robot on the alternative route segment.

In some examples, then, the alternative route segment **602A, 604A** is a predefined alternative route segment. In some of these examples, for an alternative route **602, 604,** the alternative route generator **506** service is configured to access information such as the configuration data that describes the predefined alternative route segment, and determine the transition segment **602B, 604B** from the current route to the predefined alternative route segment.

In some examples, the offset **606** is a predefined geometric offset. In some of these examples, for an alternative route **602, 604,** the alternative route generator **506** service is configured to access information such as the configuration data that describes the predefined geometric offset. The alternative route generator service is configured to determine the alternative route segment **602A, 604A** having the predefined geometric offset, and determine the transition segment **602B, 604B** from the current route to the alternative route segment as determined.

In some examples, for an alternative route **602, 604,** the alternative route generator **506** service is configured to determine the offset **606** that is a function of at least one of a type of the robot **204,** a state of the robot, or a status of the robot. In some of these examples, the alternative route generator service is configured to determine the alternative route segment **602A, 604A** having the offset as determined, and determine the transition segment **602B, 604B** from the current route to the alternative route segment as determined.

Returning to FIG. 5, again, the route selector **508** service is configured to receive an indication of the conflict from the conflict detection **504** service, and which may include a time or distance to a point of approach (e.g., closest point of approach) between the nearby moving object **404** and the robot **204.** The route selector service may also receive the alternate routes **602, 604** for the robot from the alternate route generator **506** service. The route selector service is configured to evaluate routes including the alternate routes according to a cost metric that depends on the time or distance to the point of approach between the nearby moving object and the robot, and a distance from the current route. In some examples, the route selector service is configured to evaluate the routes further including the current route **402** according to the cost metric. In some examples, the cost metric further depends on at least one of terrain along the routes, or a state of an environment of the robot. In some examples, the route selector service may be configured to rank the routes, and cost metric may allow the route selector service to evaluate the routes with the higher ranked routes being those with a longer time or distance to the point of approach, and/or closest to the current route.

In some examples, the route selector **508** service is configured to feed the alternate routes **602, 604** for the robot **204** back to the conflict detection **504** service. In some of these examples, the conflict detection service is configured to determine respective trajectories of the robot on the alternate routes, such as from the data that indicates the position and velocity of the robot. The conflict detection service is configured to detect any conflicts between the robot and the nearby moving object from comparisons of the robot on the respective trajectories, and the nearby moving object on its predicted trajectory. The conflict detection service is configured to output an indication of any conflict, as well as the time or distance to the point of approach between the nearby moving object and the robot on the respective trajectories. And at least the time or distance to the point of approach may be used by the route selector service to determine the cost metric and from it to evaluate the routes.

The route selector **508** service is configured to select a route from the routes (alternate routes **602, 604** and perhaps also the current route **402**) for use in at least one of guidance, navigation or control of the robot to avoid the conflict. The route selector service may be configured to output an indication of the route as selected. The route selector service may output an indication of one or more higher ranked ones of the routes. The route selector service may also output a status message with information such as the times or distances to the point of approach between the nearby moving object and the robot on the higher ranked ones of the routes.

The MMS **210** and in particular the mission execution subsystem **310** of the MMS is configured to determine at least one maneuver to cause the robot to travel the route as selected, and the MMS is configured to cause the robot **204** to execute the at least one maneuver. The MMS is configured to determine at least one maneuver to cause the robot to travel a selected one of the one or more higher ranked ones of the routes **402, 602, 604.** This may include the MMS being configured to send one or more maneuver commands to the RMS **208** to control the robot to follow the maneuver commands and thereby execute the at least one maneuver. The MMS is configured to cause the robot to travel the route as selected. FIG. 7 illustrates the robot as before, and one of the routes, in particular alternate route **602,** that the robot may be caused to travel to avoid conflict with the nearby moving object **404.**

In some examples in which the robot **204** is caused to travel one of the alternate routes (e.g., alternate route **602**), the mission execution subsystem **310** of the MMS **210** is further configured to cause the robot to return to the current route during travel of the robot on the one of the alternate routes. In this regard, the track management **502,** conflict detection **504,** alternate route generator **506** and route selector **508** services may continue as described above. The cost metric may be defined such that the current route **402** is the highest ranked one of the routes **402, 602, 604** when the conflict detection service no longer detects the conflict for the robot on the current route. The mission execution subsystem may then cause the robot to return to the current route.

Although described in the context of a nearby moving object, examples of the present disclosure may be equally applicable to a nearby stationary object or spatial condition such as a physical obstacle (e.g., man-made structures, terrain), weather condition, artificial threat or no-fly zone. In some of these examples, a position of the nearby stationary object or spatial condition may be accessed. A conflict between the robot and the nearby stationary object or spatial condition may be detected from a comparison of the robot on the trajectory of the robot, and the position of the nearby stationary object or spatial condition. Alternate routes may be determined, routes evaluated and a route selected in a manner the same as or similar to that described in the context of a nearby moving object. Other examples in the context of the nearby moving object described herein may also similarly be applied in the context of a nearby stationary object or spatial condition.

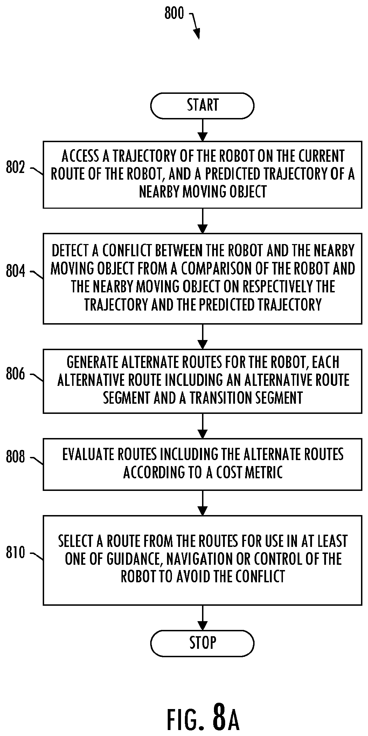

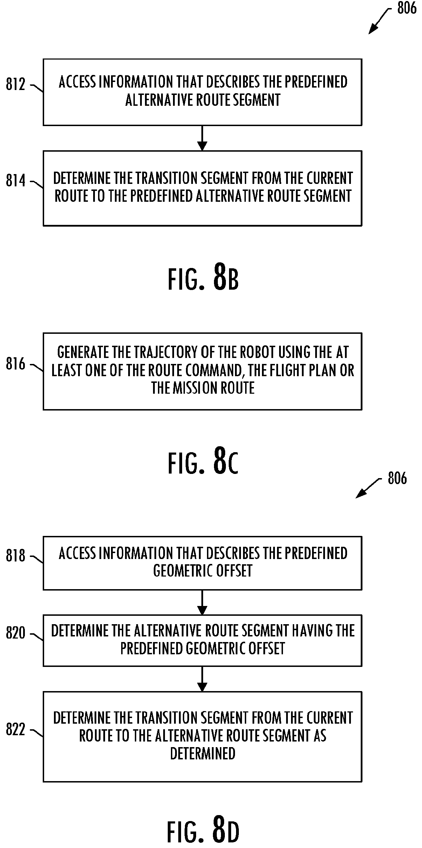

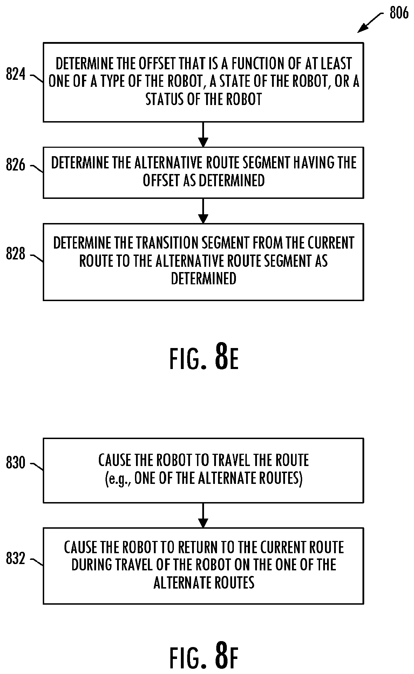

FIGS. 8A, 8B, 8C, 8D, 8E and 8F are flowcharts illustrating various steps in a method **800** of detecting and avoiding conflict along a current route **402** of a robot, according to examples of the present disclosure. The method includes accessing a trajectory of the robot on the current route of the robot, and a predicted trajectory of a nearby moving object, as shown at block **802** of FIG. 8A. The method includes detecting a conflict between the robot and the nearby moving object from a comparison of the robot and the nearby moving object on respectively the trajectory of the robot, and the predicted trajectory of the nearby moving object, as shown at block **804.**

As also shown, the method **800** includes determining alternate routes **602, 604** for the robot, each alternative route including an alternative route segment **602A, 604A** offset **606** from the current route **402,** and a transition segment **602B, 604B** from the current route to the alternative route segment, as shown at block **806.** The method includes evaluating routes including the alternate routes according to a cost metric that depends on a time or distance to a point of approach (e.g., closest point of approach) between the nearby moving object and the robot, and a distance from the current route, as shown at block **808.** In some examples, the cost metric further depends on at least one of terrain along the routes, or a state of an environment of the robot. And the method includes selecting a route from the routes for use in at least one of guidance, navigation or control of the robot to avoid the conflict, as shown at block **810.**

In some examples, the alternative route segment **602A, 604A** is a predefined alternative route segment. In some of these examples, determining the alternate routes **602, 604** at block **806** includes for an alternative route, accessing information that describes the predefined alternative route segment, and determining the transition segment **602B, 604B** from the current route **402** to the predefined alternative route segment, as shown at blocks **812** and **814** of FIG. 8B.

In some examples, the current route **402** of the robot is described by at least one of a route command, a flight plan or a mission route. In some of these examples, the method **800** further includes determining the trajectory of the robot using the at least one of the route command, the flight plan or the mission route, as shown at block **816** of FIG. 8C.

In some examples, the offset **606** is a predefined geometric offset. In some of these examples, determining the alternate routes **602, 604** at block **806** includes for an alternative route, accessing information that describes the predefined geometric offset, as shown at block **818** of FIG. 8D. The alternative route segment **602A, 604A** having the predefined geometric offset is determined at block **820.** And the transition segment **602B, 604B** is determined from the current route **402** to the alternative route segment as determined, as shown at block **822.**

In some examples, determining the alternate routes **602, 604** at block **806** includes for an alternative route determining the offset **606** that is a function of at least one of a type of the robot, a state of the robot, or a status of the robot, as shown at block **824** of FIG. 8E. Also in some of these examples, determining the alternate routes includes for the alternative route, determining the alternative route segment **602A, 604A** having the offset as determined, as shown at block **826.** And the transition segment **602B, 604B** is determined from the current route **402** to the alternative route segment as determined, as shown at block **828.**

In some examples, the method **800** further includes causing **830** the robot to travel the route as selected, as shown at block **830** of FIG. 8F. And in some further examples in which the route is one of the alternate routes **602, 604,** the method further includes causing the robot to return to the current route **402** during travel of the robot on the one of the alternate routes, as shown at block **832.**

According to examples of the present disclosure, the MMS **210** and its subsystems including the interface subsystem **302,** situational awareness subsystem **304,** mission planning subsystem **306,** mission coordination subsystem **308** and mission execution subsystem **310** may be implemented by various means. Means for implementing the MMS and its subsystems may include hardware, alone or under direction of one or more computer programs from a computer-readable storage medium. In some examples, one or more apparatuses may be configured to function as or otherwise implement the MMS and its subsystems shown and described herein. In examples involving more than one apparatus, the respective apparatuses may be connected to or otherwise in communication with one another in a number of different manners, such as directly or indirectly via a wired or wireless network or the like.

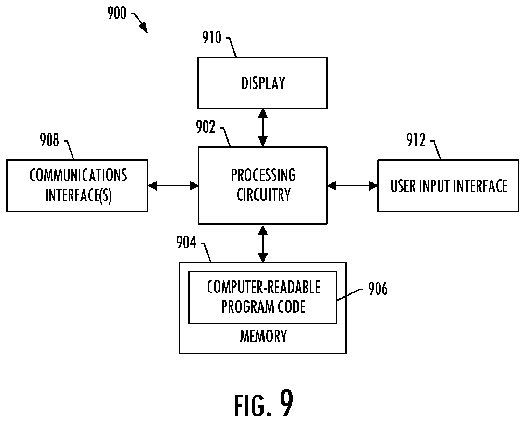

FIG. 9 illustrates an apparatus **900** according to some examples of the present disclosure. The apparatus may comprise, include or be embodied in one or more fixed or portable electronic devices. The apparatus may include one or more of each of a number of components such as, for example, processing circuitry **902** (e.g., processor unit) connected to a memory **904** (e.g., storage device).

The processing circuitry **902** may be composed of one or more processors alone or in combination with one or more memories. The processing circuitry may be any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory **904** (of the same or another apparatus).

The processing circuitry **902** may be a number of processors, a multi-core processor or some other type of processor, depending on the particular implementation. Further, the processing circuitry may be implemented using a number of heterogeneous processor systems in which a main processor is present with one or more secondary processors on a single chip. In other illustrative examples, the processing circuitry may be a symmetric multi-processor system containing multiple processors of the same type. In yet other examples, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to examples of the present disclosure.

The memory **904** may be any piece of computer hardware that is capable of storing information such as, for example, data, computer programs (e.g., computer-readable program code **906**) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may refer to a computer-readable storage medium or computer-readable transmission medium.

In addition to the memory **904,** the processing circuitry **902** may also be connected to one or more interfaces for displaying, transmitting and/or receiving information. The interfaces may include a communications interface **908** (e.g., communications unit) and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display **910** and/or one or more user input interfaces **912** (e.g., input/output unit). The display may be configured to present or otherwise display information to a user, suitable examples of which include a liquid crystal display (LCD), light-emitting diode display (LED), plasma display panel (PDP) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

As indicated above, program code instructions may be stored in memory, and executed by processing circuitry that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, a processing circuitry or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of the program code instructions may be performed sequentially such that one instruction is retrieved, loaded and executed at a time. In some examples, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by a processing circuitry, or storage of instructions in a computer-readable storage medium, supports combinations of operations for performing the specified functions. In this manner, an apparatus **900** may include a processing circuitry **902** and a computer-readable storage medium or memory **904** coupled to the processing circuitry, where the processing circuitry is configured to execute computer-readable program code **906** stored in the memory. It will also be understood that one or more functions, and combinations of functions, may be implemented by special purpose hardware-based computer systems and/or processing circuitry which perform the specified functions, or combinations of special purpose hardware and program code instructions.

Many modifications and other examples of the disclosure set forth herein will come to mind to one skilled in the art to which the disclosure pertains having the benefit of the teachings presented in the foregoing description and the associated figures. Therefore, it is to be understood that the disclosure is not to be limited to the specific examples disclosed and that modifications and other examples are intended to be included within the scope of the appended claims. Moreover, although the foregoing description and the associated figures describe examples in the context of certain example combinations of elements and/or functions, it should be appreciated that different combinations of elements and/or functions may be provided by alternative examples without departing from the scope of the appended claims. In this regard, for example, different combinations of elements and/or functions than those explicitly described above are also contemplated as may be set forth in some of the appended claims.

## Claims

1. A method (800) of detecting and avoiding conflict along a current route (402) of a robot (204), the method comprising:
accessing (802) a trajectory of the robot on the current route of the robot, and a predicted trajectory of a nearby moving object;
detecting (804) a conflict between the robot and the nearby moving object from a comparison of the robot and the nearby moving object on respectively the trajectory of the robot, and the predicted trajectory of the nearby moving object;
determining (806) alternate routes (602, 604) for the robot, each alternate route including an alternative route segment (602A, 604A) offset (606) from the current route, and a transition segment (602B, 604B) from the current route to the alternative route segment;
evaluating (808) routes including the alternate routes according to a cost metric that depends on a time or distance to a point of approach between the nearby moving object and the robot, and a distance from the current route,
**characterised in that**
the cost metric is defined such that the current route (402) is the highest ranked one of the routes (402, 602, 604) when the conflict is no longer detected for the robot (204) on the current route and higher ranked routes are those with a longer time or distance to the point of approach, and/or closest to the current route (402);
selecting (810) a route from the higher ranked routes for use in at least one of guidance, navigation or control of the robot to avoid the conflict; and
causing (830) the robot (204) to execute a maneuver to cause the robot to travel the route as selected.

2. The method (800) of claim 1, wherein the alternative route segment (602A, 604A) is a predefined alternative route segment, and determining (806) the alternate routes (602, 604) comprises for an alternative route:
accessing (812) information that describes the predefined alternative route segment; and
determining (814) the transition segment (602B, 604B) from the current route (402) to the predefined alternative route segment.

3. The method (800) of claim 1 or claim 2, wherein the current route (402) of the robot (204) is described by at least one of a route command, a flight plan or a mission route, and the method further comprises determining (816) the trajectory of the robot using the at least one of the route command, the flight plan or the mission route.

4. The method (800) of any of claims 1 thru 3 wherein the offset (606) is a predefined geometric offset, and determining (806) the alternate routes (602, 604) comprises for an alternate route:
accessing (818) information that describes the predefined geometric offset;
determining (820) the alternative route segment (602A, 604A) having the predefined geometric offset; and
determining (822) the transition segment (602B, 604B) from the current route (402) to the alternative route segment as determined.

5. The method (800) of any of claims 1 thru 4, wherein determining (806) the alternate routes (602, 604) comprises for an alternate route:
determining (824) the offset (606) that is a function of at least one of a type of the robot (204), a state of the robot, or a status of the robot;
determining (826) the alternative route segment (602A, 604A) having the offset as determined; and
determining (828) the transition segment (602B, 604B) from the current route (402) to the alternative route segment as determined.

6. The method (800) of any of claims 1 thru 5, wherein the cost metric further depends on at least one of terrain along the routes, or a state of an environment of the robot (204).

7. The method (800) of any of claims 1 thru 6 further comprising:
causing (830) the robot (204) to travel the route that is one of the alternate routes (602, 604); and
causing (832) the robot to return to the current route (402) during travel of the robot on the one of the alternate routes.

8. The method (800) of any of claims 1 thru 7, wherein the robot is manned.

9. The method (800) of any of claims 1 thru 8, wherein the robot is an aerial robot which is configured to fly.

10. An apparatus (900) for detecting and avoiding conflict along a current route (402) of a robot (204), the apparatus comprising:
a memory (904) configured to store computer-readable program code (906); and
processing circuitry (902) configured to access the memory, and execute the computer-readable program code to cause the apparatus to perform the method of any of claims 1 thru 9.

11. The apparatus (900) of claim 10, wherein the apparatus is a manned robot.

12. The apparatus (900) of claim 10 or claim 11, wherein the apparatus is an aerial robot which is configured to fly.

13. The apparatus (900) of any of claims 10 thru 12, wherein the apparatus is a semi-autonomous robot or an autonomous robot, such that at least some maneuvers are executed independent of or with minimal human intervention.

14. A computer program comprising computer-readable program code that, in response to execution by processing circuitry, causes the processing circuitry to perform the method of any of claims 1 thru 9.

15. A computer-readable storage medium having the stored thereon the computer program of claim 14.

## Patentansprüche

1. Verfahren (800) zum Erfassen und Vermeiden von Konflikten entlang der aktuellen Route (402) eines Roboters (204), wobei das Verfahren umfasst:
Zugreifen (802) auf eine Flugbahn des Roboters auf der aktuellen Route des Roboters und eine vorhergesagte Flugbahn eines sich in der Nähe bewegenden Objekts;
Erfassen (804) eines Konflikts zwischen dem Roboter und dem sich in der Nähe bewegenden Objekt durch einen Vergleich zwischen dem Roboter und dem sich in der Nähe bewegenden Objekt jeweils auf der Flugbahn des Roboters und der vorhergesagten Flugbahn des sich in der Nähe bewegenden Objekts;
Bestimmen (806) von alternativen Routen (602, 604) für den Roboter, wobei jede alternative Route ein alternatives Routensegment (602A, 604A) mit einem Versatz (606) von der aktuellen Route und ein Übergangssegment (602B, 604B) von der aktuellen Route zum alternativen Routensegment einschließt;
Auswerten (808) von Routen einschließlich der alternativen Routen gemäß einer Kostenmetrik, die von der Zeit oder Entfernung bis zu einem Annäherungspunkt zwischen dem sich in der Nähe bewegenden Objekt und dem Roboter sowie von einer Entfernung zur aktuellen Route abhängt,
**dadurch gekennzeichnet, dass**
die Kostenmetrik so definiert ist, dass die aktuelle Route (402) die am höchsten bewertete der Routen (402, 602, 604) ist, wenn der Konflikt für den Roboter (204) auf der aktuellen Route nicht mehr erkannt wird und höher bewertete Routen diejenigen mit einer längeren Zeit oder Entfernung zum Annäherungspunkt und/oder am nächsten zur aktuellen Route (402) sind;
Auswählen (810) einer Route aus den höher bewerteten Routen zur Verwendung in mindestens einem von Führung, Navigation oder Steuerung des Roboters, um den Konflikt zu vermeiden; und
Veranlassen (830), dass der Roboter (204) ein Manöver ausführt, um den Roboter zu veranlassen, die ausgewählte Route abzufahren.

2. Verfahren (800) nach Anspruch 1, wobei das alternative Routensegment (602A, 604A) ein vordefiniertes alternatives Routensegment ist, und Bestimmen (806) der alternativen Routen (602, 604) für eine alternative Route umfasst:
Zugreifen (812) auf Informationen, die das vordefinierte alternative Routensegment beschreiben; und
Bestimmen (814) des Übergangssegments (602B, 604B) von der aktuellen Route (402) zum vordefinierten alternativen Routensegment.

3. Verfahren (800) nach Anspruch 1 oder 2, wobei die aktuelle Route (402) des Roboters (204) durch mindestens einen von einem Routenbefehl, einem Flugplan oder einer Missionsroute beschrieben wird, und das Verfahren ferner das Bestimmen (816) der Flugbahn des Roboters unter Verwendung des mindestens einen von dem Routenbefehl, dem Flugplan oder der Missionsroute umfasst.

4. Verfahren (800) nach einem der Ansprüche 1 bis 3, wobei der Versatz (606) ein vordefinierter geometrischer Versatz ist, und Bestimmen (806) der alternativen Routen (602, 604) für eine alternative Route Folgendes umfasst:
Zugreifen (818) auf Informationen, die den vordefinierten geometrischen Versatz beschreiben;
Bestimmen (820) des alternativen Routensegments (602A, 604A), das den vordefinierten geometrischen Versatz aufweist; und
Bestimmen (822) des Übergangssegments (602B, 604B) von der aktuellen Route (402) zum alternativen bestimmten Routensegment.

5. Verfahren (800) nach einem der Ansprüche 1 bis 4, wobei Bestimmen (806) der alternativen Routen (602, 604) für eine alternative Route Folgendes umfasst:
Bestimmen (824) des Versatzes (606), der eine Funktion von mindestens einem von einem Typ des Roboters (204), einem Zustand des Roboters oder einem Status des Roboters ist;
Bestimmen (826) des alternativen Routensegments (602A, 604A), das den bestimmten Versatz aufweist; und
Bestimmen (828) des Übergangssegments (602B, 604B) von der aktuellen Route (402) zum alternativen bestimmten Routensegment.

6. Verfahren (800) nach einem der Ansprüche 1 bis 5, wobei die Kostenmetrik ferner von mindestens einem von dem Gelände entlang der Routen oder einem Zustand einer Umgebung des Roboters (204) abhängt.

7. Verfahren (800) nach einem der Ansprüche 1 bis 6, ferner umfassend:
Veranlassen (830), dass der Roboter (204) die Route fährt, die eine der alternativen Routen (602, 604) ist; und
Veranlassen (832), dass der Roboter während der Fahrt des Roboters auf einer der alternativen Routen zur aktuellen Route (402) zurückkehrt.

8. Verfahren (800) nach einem der Ansprüche 1 bis 7, wobei der Roboter bemannt ist.

9. Verfahren (800) nach einem der Ansprüche 1 bis 8, wobei es sich bei dem Roboter um einen zum Fliegen konfigurierten Flugroboter handelt.

10. Einrichtung (900) zum Erfassen und Vermeiden von Konflikten entlang der aktuellen Route (402) eines Roboters (204), wobei die Einrichtung umfasst:
einen Speicher (904), der zur Speicherung von computerlesbarem Programmcode (906) konfiguriert ist; und
eine Verarbeitungsschaltung (902), die so konfiguriert ist, dass sie auf den Speicher zugreift und den computerlesbaren Programmcode ausführt, um die Einrichtung zu veranlassen, das Verfahren nach einem der Ansprüche 1 bis 9 durchzuführen.

11. Einrichtung (900) nach Anspruch 10, wobei es sich bei der Einrichtung um einen bemannten Roboter handelt.

12. Einrichtung (900) nach Anspruch 10 oder Anspruch 11, wobei es sich bei der Einrichtung um einen zum Fliegen konfigurierten Flugroboter handelt.

13. Einrichtung (900) nach einem der Ansprüche 10 bis 12, wobei es sich bei der Einrichtung um einen halbautonomen Roboter oder einen autonomen Roboter handelt, sodass mindestens einige Manöver unabhängig von oder mit minimalem menschlichen Eingriff ausgeführt werden.

14. Computerprogramm, umfassend computerlesbaren Programmcode, der als Reaktion auf die Ausführung durch eine Verarbeitungsschaltung die Verarbeitungsschaltung veranlasst, das Verfahren nach einem der Ansprüche 1 bis 9 durchzuführen.

15. Computerlesbares Speichermedium, auf dem das Computerprogramm nach Anspruch 14 gespeichert ist.

## Revendications

1. Procédé (800) de détection et d'évitement de conflit le long d'un itinéraire actuel (402) d'un robot (204), le procédé comprenant :
l'accès (802) à une trajectoire du robot sur l'itinéraire actuel du robot, et à une trajectoire prévue d'un objet en mouvement à proximité ;
la détection (804) d'un conflit entre le robot et l'objet en mouvement à proximité à partir d'une comparaison du robot et de l'objet en mouvement à proximité respectivement sur la trajectoire du robot, et la trajectoire prévue de l'objet en mouvement à proximité ;
la détermination (806) d'itinéraires de remplacement (602, 604) pour le robot, chaque itinéraire de remplacement incluant un segment d'itinéraire alternatif (602A, 604A) décalé (606) par rapport à l'itinéraire actuel, et un segment de transition (602B, 604B) depuis l'itinéraire actuel vers le segment d'itinéraire alternatif ;
la évaluation (808) des itinéraires incluant les itinéraires de remplacement, selon une métrique de coût qui dépend d'un temps ou d'une distance par rapport à un point d'approche entre l'objet en mouvement à proximité et le robot, et d'une distance par rapport à l'itinéraire actuel,
**caractérisé en ce que**
la métrique de coût est définie de telle sorte que l'itinéraire actuel (402) est celui des itinéraires (402, 602, 604) le mieux classé lorsque le conflit n'est plus détecté pour le robot (204) sur l'itinéraire actuel, et des itinéraires mieux classés sont ceux avec un temps plus long ou une distance plus longue par rapport au point d'approche, et/ou le plus proche de l'itinéraire actuel (402) ;
la sélection (810) d'un itinéraire parmi les itinéraires les mieux classés pour une utilisation dans au moins un parmi un guidage, une navigation ou une commande du robot pour éviter le conflit ; et
l'amenée (830) du robot (204) à exécuter une manœuvre pour amener le robot à parcourir l'itinéraire tel que sélectionné.

2. Procédé (800) selon la revendication 1, dans lequel le segment d'itinéraire alternatif (602A, 604A) est un segment d'itinéraire alternatif prédéfini, et la détermination (806) des itinéraires de remplacement (602, 604) comprend, pour un itinéraire alternatif :
l'accès (812) à des informations qui décrivent le segment d'itinéraire alternatif prédéfini ; et
la détermination (814) du segment de transition (602B, 604B) de l'itinéraire actuel (402) vers le segment d'itinéraire alternatif prédéfini.

3. Procédé (800) selon la revendication 1 ou la revendication 2, dans lequel l'itinéraire actuel (402) du robot (204) est décrit par au moins un parmi une instruction d'itinéraire, un plan de vol ou un itinéraire de mission, et le procédé comprend en outre une détermination (816) de la trajectoire du robot en utilisant le au moins un parmi l'instruction d'itinéraire, le plan de vol ou l'itinéraire de mission.

4. Procédé (800) selon l'une quelconque des revendications 1 à 3 dans lequel le décalage (606) est un décalage géométrique prédéfini, et la détermination (806) des itinéraires de remplacement (602, 604) comprend, pour un itinéraire de remplacement :
l'accès (818) à des informations qui décrivent le décalage géométrique prédéfini ;
la détermination (820) du segment d'itinéraire alternatif (602A, 604A) présentant le décalage géométrique prédéfini ; et
la détermination (822) du segment de transition (602B, 604B) de l'itinéraire actuel (402) au segment d'itinéraire alternatif tel que déterminé.

5. Procédé (800) selon l'une quelconque des revendications 1 à 4, dans lequel la détermination (806) des itinéraires de remplacement (602, 604) comprend, pour un itinéraire de remplacement :
la détermination (824) du décalage (606) qui est fonction d'au moins un d'un type du robot (204), d'un état du robot ou d'un statut du robot ;
la détermination (826) du segment d'itinéraire alternatif (602A, 604A) présentant le décalage tel que déterminé ; et
la détermination (828) du segment de transition (602B, 604B) de l'itinéraire actuel (402) au segment d'itinéraire alternatif tel que déterminé.

6. Procédé (800) selon l'une quelconque des revendications 1 à 5, dans lequel la métrique de coût dépend en outre d'au moins un parmi un terrain le long des itinéraires, ou un état d'un environnement du robot (204).

7. Procédé (800) selon l'une quelconque des revendications 1 à 6 comprenant en outre :
l'amenée (830) du robot (204) à parcourir l'itinéraire qui est l'un des itinéraires de remplacement (602, 604) ; et
l'amenée (832) du robot à revenir sur l'itinéraire actuel (402) pendant le déplacement du robot sur ledit itinéraire de remplacement.

8. Procédé (800) selon l'une quelconque des revendications 1 à 7, dans lequel le robot est piloté.

9. Procédé (800) selon l'une quelconque des revendications 1 à 8, dans lequel le robot est un robot aérien qui est configuré pour voler.

10. Appareil (900) pour détecter et éviter un conflit le long d'un itinéraire actuel (402) d'un robot (204), l'appareil comprenant :
une mémoire (904) configurée pour stocker un code de programme lisible par ordinateur (906) ; et
des circuits de traitement (902) configurés pour accéder à la mémoire, et exécuter le code de programme lisible par ordinateur pour amener l'appareil à exécuter le procédé selon l'une quelconque des revendications 1 à 9.

11. Appareil (900) selon la revendication 10, dans lequel l'appareil est un robot piloté.

12. Appareil (900) selon la revendication 10 ou la revendication 11, dans lequel l'appareil est un robot aérien qui est configuré pour voler.

13. Appareil (900) selon l'une quelconque des revendications 10 à 12, dans lequel l'appareil est un robot semi-autonome ou un robot autonome, de telle sorte qu'au moins certaines manœuvres sont exécutées indépendamment de ou avec une intervention humaine minimale.

14. Programme informatique comprenant un code de programme lisible par ordinateur qui, en réponse à une exécution par des circuits de traitement, amène les circuits de traitement à exécuter le procédé selon l'une quelconque des revendications 1 à 9.

15. Support de stockage lisible par ordinateur sur lequel est stocké le programme informatique selon la revendication 14.
